# EUROPEAN PATENT SPECIFICATION

(11) **EP 4 333 499 B1**
(45) Date of publication and mention of the grant of the patent: **06.05.2026**
(21) Application number: 22795441.9
(22) Date of filing: 28.03.2022
(51) Int. Cl.: H04W 24/02, H04W 28/16, H04W 40/24, H04W 92/20, H04W 84/04

(54) **COMMUNICATION DEVICE, CONTROL METHOD FOR COMMUNICATION DEVICE, AND PROGRAM**
KOMMUNIKATIONSVORRICHTUNG, STEUERUNGSVERFAHREN FÜR DIE KOMMUNIKATIONSVORRICHTUNG UND PROGRAMM
DISPOSITIF DE COMMUNICATION, PROCÉDÉ DE COMMANDE DE DISPOSITIF DE COMMUNICATION ET PROGRAMME

(30) Priority: 26.04.2021 JP 2021074410
(43) Date of publication of application: 06.03.2024
(73) Proprietor: CANON KABUSHIKI KAISHA, Tokyo 146-8501 (JP)
(72) Inventor: HORIO, Daisuke, Tokyo 146-8501 (JP)
(74) Representative: Canon Europe Limited
(86) International application number: PCT/JP2022/014826
(87) International publication number: WO 2022/230524

(56) References cited:
- WO-A1-2020/000203
- WO-A1-2020/080044
- KR-A- 20180 069 092
- US-A1- 2020 100 176
- HUAWEI: "Slice Requirement Assurance for IAB E2E Link", vol. RAN WG3, no. Spokane, US; 20181112 - 20181116, 11 November 2018 (2018-11-11), XP051558324, Retrieved from the Internet <URL:http://www.3gpp.org/ftp/Meetings%5F3GPP%5FSYNC/RAN3/Docs/R3%2D186544%2Ezip> [retrieved on 20181111]
- NOKIA ET AL: "IAB Node Integration Option 2a", vol. RAN WG3, no. Chengdu, China; 20181008 - 20181012, 29 September 2018 (2018-09-29), pages 1 - 6, XP051528969, Retrieved from the Internet <URL:http://www.3gpp.org/ftp/tsg%5Fran/WG3%5FIu/TSGR3%5F101bis/Docs/R3%2D185696%2Ezip> [retrieved on 20180929]

## Description

### TECHNICAL FIELD

The present invention relates to a communication device that functions as a base station in a communication system and as an Integrated Access and Backhaul, IAB, donor in an IAB network, a communication device that functions as an IAB node that relays communication between the base station and a user equipment in a communication system, corresponding methods, and a program for carrying carry out said methods.

### BACKGROUND ART

IAB (Integrated Access and Backhaul) has been standardized as backhaul communication technology in 3GPP (3rd Generation Partnership Project). With IAB technology, 28 GHz millimeter-wave wireless communication and the like used for access communication between base stations and user equipments (UEs) are utilized as backhaul communication simultaneously (PTL1). Use of the IAB technology makes it possible to expand the area coverage at a lower cost, compared to wired communication using conventional optical fibers, and thus it is expected that the IAB technology is effective in constructing next-generation public networks.

In backhaul communications using IAB technology, a relay device called an IAB node relays communications from IAB donors, which are equivalent to conventional base stations, using millimeter wave communications. Furthermore, an IAB node can expand an area by forming bearers between the IAB node and other multiple IAB nodes, and forming a network tree (IAB network) starting from an IAB donor. IAB nodes serving as extension means for expanding the area of an IAB donor can be controlled via BAP (Backhaul Adaptation Protocol), which is the routing protocol for IAB.

On the other hand, in next-generation public networks, the introduction of the concept of network slicing, which virtually provides network slices that meet the requirements of multiple different services on a shared network, is being studied. eMBB (enhanced Mobile Broadband), which is high-speed and large-capacity communication, URLLC (Ultra-Reliable and Low Latency Communications), which are low latency communications, and MIot (Massive Internet of Things), which is simultaneous multiple connection, have been already specified as types of network slices.

PTL2 discloses a method in which UE can receive a desired service as a result of the UE transmitting a network slice request to a base station, and the base station responding whether or not the base station supports the network slice, for example. A mechanism, which allows the UE to select a network slice provided by the base station according to a purpose and makes the network slice available in this manner, has been studied.

### CITATION LIST

### PATENT LITERATURE

PTL1: Japanese Patent Laid-Open No. 2019-534625
PTL2: Japanese Patent Laid-Open No. 2020-511863

A 3GPP submission R3-186544 by Huawei entitled "Slice Requirement Assurance for IAB E2E Link" states that it is a common understanding that IAB node shall support slicing and goes onto discuss, since a path via the IAB nodes can comprise multiple hops, the need of communicating slice information to IAB nodes on the multi-hop E2E link to ensure slice requirements on the IAB E2E link.

A 3GPP submission R3-185696 by Nokia et al entitled "IAB Node Integration Option 2a" describes a possible IAB-node integration procedure for architecture-2a CP.

PCT patent application publication no. WO2020/000203 A1 is entitled "Dynamic Route Selection in Integrated Access and Backhaul System". The abstract describes a method including receiving, by at least one integrated access and backhaul node and donor distributed unit, routing information and preference information to reach at least one mobile terminal and the at least one donor in an integrated access and backhaul node topology. The method further includes transmitting at least one link event notification, and receiving at least one link event notification. The method also includes adapting at least one of an uplink route and a downlink route based on the preference information and the at least one link event notification.

### SUMMARY OF INVENTION

### TECHNICAL PROBLEM

The operation of network slices in communication networks such as IAB networks is not clearly specified in BAP (Backhaul Adaptation Protocol). Therefore, in the case of the IAB network, the IAB nodes directly notify lower IAB nodes and UE of NSSAI (Network Slice Selection Assistance Information) received from an IAB donor connected. Note that NSSAI is information that includes SSTs (Slice/Service types), which indicate the types of network slices that can be supported, in a list form.

In such operation, an IAB node far away from an IAB donor can only make a notification of the same NSSAI as that of the IAB donor even when it does not have a configuration to support network slices supported by the IAB donor, for example. As a result, UE that receives the notification of NSSAI may not be able to provide the desired quality even when the UE selects and requests a desirable network slice.

The present invention has been achieved in view of the above-described issues, and it is an object of the present invention to appropriately determine and transmit information regarding a network slice that can be supported by a node.

### SOLUTION TO PROBLEM

In accordance with an aspect of the present invention, there is provided a communication device according to claims 1 to 10 of the accompanying claims.

In accordance with another aspect of the present invention, there is provided a communication device according to claims 11 to 13 of the accompanying claims.

In accordance with another aspect of the present invention, there is provided a method for controlling a communication device according to claim 14 of the accompanying claims.

In accordance with another aspect of the present invention, there is provided a method for controlling a communication device according to claim 15 of the accompanying claims.

In accordance with another aspect of the present invention, there is provided a program according to claim 16 of the accompanying claims.

### ADVANTAGEOUS EFFECTS OF INVENTION

According to the present invention, it is possible to appropriately determine and transmit information regarding a network slice supported by a node.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing an example of a backhaul communication system.
FIG. 2 is a block diagram showing an example of a hardware configuration of an IAB donor.
FIG. 3 is a block diagram showing an example of a software functional configuration of an IAB donor.
FIG. 4A is a flowchart showing processing for determining a slice type of IAB node according to an embodiment.
FIG. 4B is a flowchart showing processing for determining a slice type of IAB node according to an embodiment.
FIG. 5 shows an example of a conceptual diagram of NSSAI information elements.
FIG. 6A is a diagram showing a communication sequence in a communication system according to an embodiment.
FIG. 6B is a diagram showing a communication sequence in a communication system according to an embodiment.
FIG. 7 is a diagram showing a network topology after a slice type is determined according to an embodiment.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate, without however departing from the scope of the invention as defined by the appended claims. Furthermore, in the attached drawings, the same reference numerals are given to the same or similar configurations, and redundant description thereof is omitted.

### Embodiment 1

### Configuration of communication system

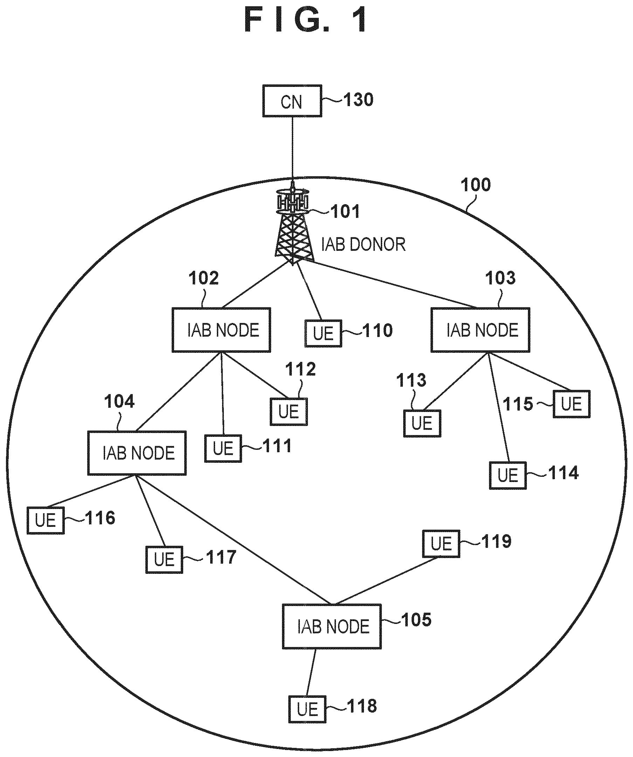

FIG. 1 is a diagram showing an example of a backhaul communication system ("communication system" hereinafter) according to Embodiment 1. A communication network using the backhaul communication may include an NR (New Radio) backhaul link and an NR access link. An IAB (Integrated Access and Backhaul) donor 101 that provides connection to a Core Network (CN) 130 is present in a communication system 100. The IAB donor 101 forms an IAB network (communication network) constituted by the IAB donor 101 and IAB nodes 102 to 105. Each IAB donor can function as a wireless base station device in the communication network. The IAB node may also function as a wireless base station device.

The IAB donor 101 performs overall control of the IAB nodes 102 to 105, and forms an area covered by the IAB donor 101. UEs 110 to 119 are connected to an IAB donor or IAB node in order to perform communication according to desired applications. As shown in FIG. 1, in the initial state, the UEs 110 to 119 connect to the IAB donor 101 or the IAB nodes 102 to 105, which have the highest radio wave intensity therefor. Note that examples of the intensity of radio waves include RSRP (Reference Signal Received Power) values and RSCP (Received Signal Code Power) values.

At the initial stage of the construction of an IAB network, the type of network slice (SST (slice/service type), which will be simply referred to as a "slice type" hereinafter) that can be supported by the IAB nodes 102 to 105 has not yet been determined. A slice type that can be supported by the IAB nodes 102 to 105 is determined by the IAB donor 101 that performs overall control of the communication system 100, and the IAB nodes 102 to 105 are informed of the slice type.

The IAB donor 101 and the IAB nodes 102 to 105 notify the UEs 110 to 119 of the determined slice type together with cell IDs (identifiers) that correspond to the IAB donor 101/IAB nodes 102 to 105. Note that notification is given of information together with the slice type, and such information is not limited to the cell IDs and need only be information with which the IAB donor 101/IAB nodes 102 to 105, which inform UEs of the slice type, can be specified (can be identified).

The UEs 110 to 119 can judge, based on the received slice type/cell ID, whether or not a slice type to be used according to an application to be executed is supported by the IAB donor 101 or the IAB nodes 102 to 105, and establish or change connection. Alternatively, the UEs 110 to 119 may request a slice type to be used from the IAB donor 101 and the IAB nodes 102 to 105, and may establish or change connection based on a response to the request.

### Configurations of IAB donor/IAB node

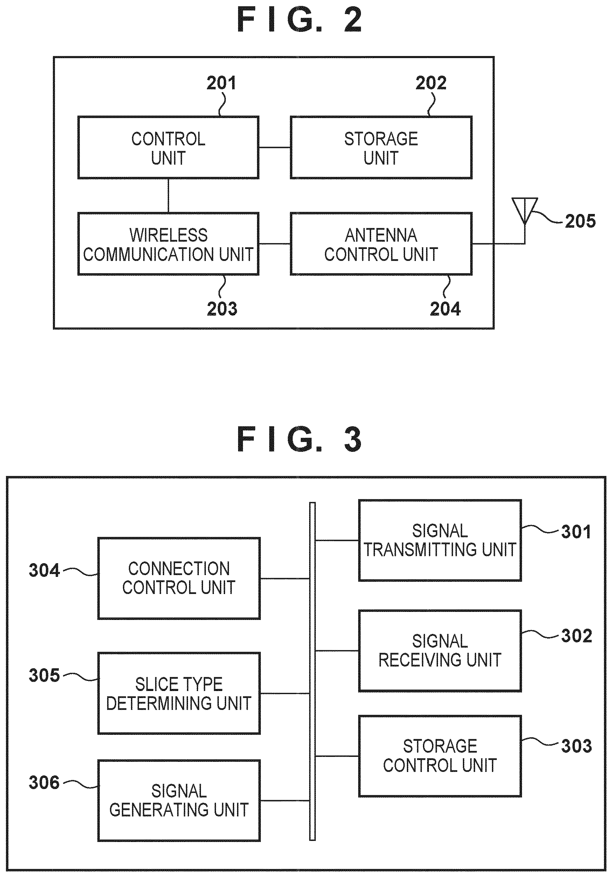

Next, configurations of the IAB donor 101 and the IAB nodes 102 to 105 will be described. FIG. 2 is a block diagram showing an example of a hardware configuration of the IAB donor 101. Although a hardware configuration will be described assuming the IAB donor 101 here, the IAB nodes 102 to 105 can also have a hardware configuration similar to that in FIG. 2.

As an example of a hardware configuration, the IAB donor 101 includes a control unit 201, a storage unit 202, a wireless communication unit 203, an antenna control unit 204, and an antenna 205. The control unit 201 performs overall control of the entire device by executing a control program stored in the storage unit 202. The control unit 201 is constituted by one or more CPUs (Central Processing Units) or MPUs (Micro Processing Units), for example.

The storage unit 202 is constituted by a ROM (Read Only Memory), RAM (Random Access Memory), or the like. The storage unit 202 stores various types of information such as a control program executed by the control unit 201 and information regarding a cell ID or UE to be connected, and path information of the IAB nodes under control (IAB nodes 102 to 105 in FIG. 1). Also, the storage unit 202 may store information regarding network slices (slice types) supported by the IAB donor 101. Various operations, which will be described later, may be performed by the control unit 201 executing the control program stored in the storage unit 202.

The wireless communication unit 203 is a wireless communication unit for performing cellular network communication such as LTE (Long Term Evolution) and 5G (5th Generation) conforming to the 3GPP (3rd Generation Partnership Project) standards. The antenna control unit 204 controls the antenna 205 used for wireless communication executed in the wireless communication unit 203. The antenna 205 may include a plurality of antennas.

FIG. 3 is a block diagram showing an example of a software functional configuration of the IAB donor 101 according to this embodiment. As an example of a software functional configuration, the IAB donor 101 includes a signal transmitting unit 301, a signal receiving unit 302, a storage control unit 303, a connection control unit 304, a slice type determining unit 305, and a signal generating unit 306. A software functional configuration will be described assuming the IAB donor 101, and the IAB nodes 102 to 105 will be described later.

The signal transmitting unit 301 and the signal receiving unit 302 control the wireless communication unit 203 and the antenna control unit 204 via the control unit 201, and execute cellular network communication (transmission and reception respectively), such as LTE and 5G conforming to the 3GPP standards, with other communication devices (the IAB nodes or UEs). The storage control unit 303 controls (stores/reads out etc.) and manages various data stored in the storage unit 202. The connection control unit 304 controls connection to other communication devices through communication via the signal transmitting unit 301 and the signal receiving unit 302, for example.

The slice type determining unit 305 determines the slice types of IAB nodes 102 to 105 based on path information and status information received (acquired) from the IAB nodes 102 to 105 via the signal receiving unit 302. In this embodiment, the slice type determining unit 305 acquires path information and status information from the IAB nodes 102 to 105, and determines the slice types of IAB nodes 102 to 105. In this embodiment, the path information may refer to (include) information regarding the number of hops from the IAB donor 101 to each of the IAB nodes 102 to 105, and information regarding routing in the IAB nodes 102 to 105. Also, the status information may refer to (include) information regarding SNR (Signal to Noise Ratio) values as the received signal quality, and the number of UEs connected, and specification information (whether or not TSN (Time-Sensitive Networking) is supported), and the like of the IAB nodes 102 to 105. TSN is network technology that enables the realization of interoperability between IT networks and industrial networks that extend standard Ethernet. Note that, although SNR is used in this embodiment, other information indicating received signal quality may be used instead of SNR.

The signal generating unit 306 generates packets (signals) for informing/notifying the IAB nodes 102 to 105 and the UEs 110 to 119 of various types of information. The signal generating unit 306 in the IAB donor 101 generates two types of packets.

The signal generating unit 306 generate, as a first type of packet, a control packet for informing the IAB nodes 102 to 105 of the slice type determined by the slice type determining unit 305. In this embodiment, the IAB nodes are informed of the slice type using a control packet according to the BAP (Backhaul Adaptation Protocol). However, there is no limitation thereto, and other control packets may be used. In a case where the IAB nodes 102 to 105 can interpret the RRC (Radio Resource Control) protocol, for example, the IAB nodes 102 to 105 may be informed by the control packet according to the RRC protocol or a protocol of a communication layer above the RRC layer in the protocol hierarchy.

The signal generating unit 306 generates, as a second type of packet, a notification packet for notifying the UEs 110 to 119 of the cell ID with which the IAB donor 101 can be identified, together with the slice type determined by the slice type determining unit 305.

Next, a software functional configuration of the IAB nodes 102 to 105 according to this embodiment will be described below. The software functional configuration of the IAB nodes 102 to 105 may be similar to the software configuration of the IAB donor 101 described with reference to FIG. 3. However, other communication devices (IAB nodes and UEs) are read as other devices (IAB donor and UEs) in the above description regarding to FIG. 3. Also, the IAB nodes 102 to 105 have no slice type determining unit 305, and the signal generating unit 306 does not generate the first type of packet. The signal generating unit 306 generates a notification packet for notifying the UEs 110 to 119 of the cell IDs with which the IAB nodes 102 to 105 can be identified, together with the slice type of which the IAB donor 101 has informed. The connection control unit 304 can perform control for link connection/release to/from UE.

### Slice type determination procedure performed by IAB donor

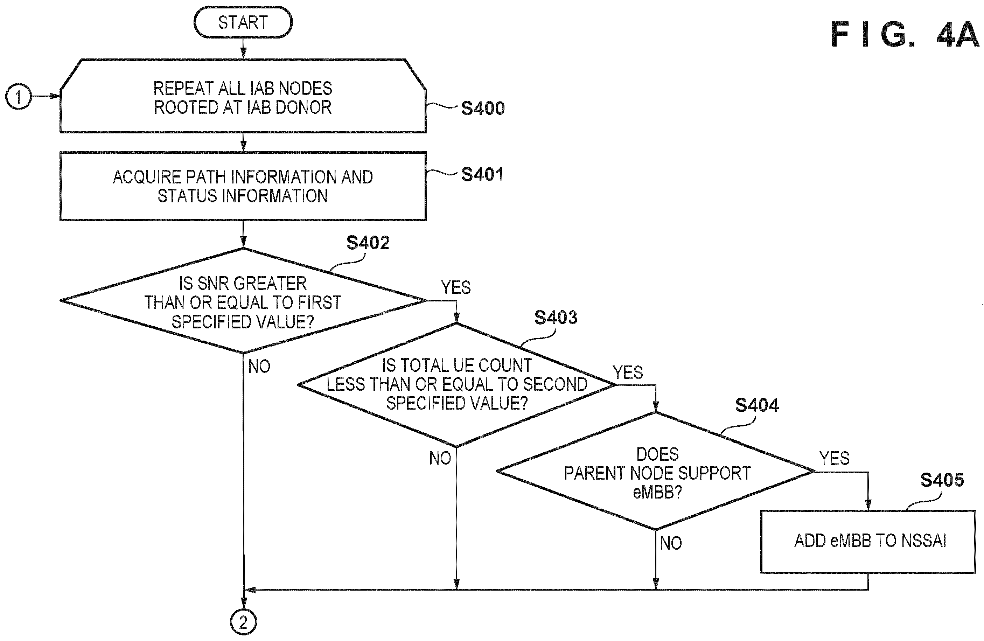

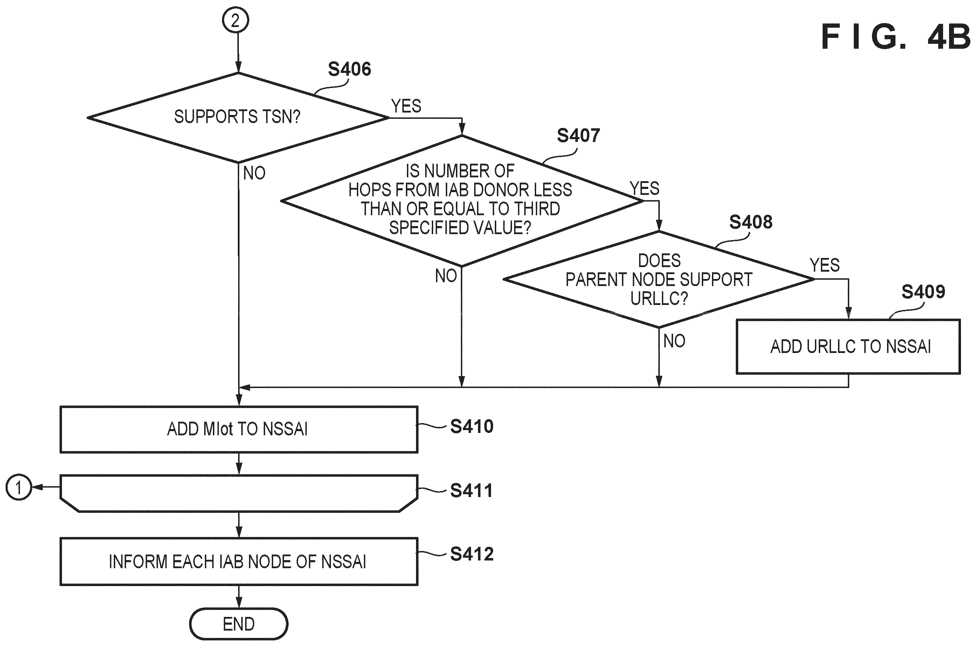

FIGS. 4A and 4B are flowcharts showing processing for determining the slice type of an IAB node by IAB according to this embodiment. Note that it is presumed that the IAB donor 101 supports all of the slice types: high-speed and large-capacity (eMBB (enhanced Mobile Broadband)), low latency (URLLC (Ultra-Reliable and Low Latency Communications)), and simultaneous multiple connection (MIot (Massive Internet of Things)). Information regarding the supported slice types can be stored in the storage unit 202. Also, it is presumed that the IAB nodes 102 to 105 can support MIot in this embodiment.

The processing from step S400 to step S411 is repeated in order to determine slice types of all IAB nodes 102 to 105 rooted at the IAB donor 101. It is presumed that, in this embodiment, as a non-limiting example, the IAB donor determines slice types in the ascending order of the number of hops from the IAB donor 101. Note that it is presumed that the number of hops from the IAB donor 101 to the IAB node 102 and the number of hops from the IAB donor 101 to the IAB node 103 are the same, but the IAB donor 101 determines slice types in the order of the IAB nodes 102, 103, 104, and 105. A target IAB node for determining the slice type in one loop from step S400 to step S411 is referred to as a "target IAB node".

After the connection control unit 304 establishes connection to the target IAB node, the slice type determining unit 305 acquires path information and status information regarding the target IAB node in step S401. Note that the slice type determining unit 305 may collect information regarding all of the IAB nodes 102 to 105 in advance outside the loop from step S400 to step S411.

The processing from step S402 to step S405 is processing for judging whether the target IAB node supports high-speed and large-capacity communication (eMBB in this embodiment) as a slice type. In step S402, the slice type determining unit 305 judges whether the SNR value included in the status information acquired from the target IAB node is greater than or equal to a first specified value. The SNR may be SNR between the target IAB node and a node (parent node) connected upstream to the target IAB node. The first specified value used here is a value set in advance to satisfy the communication speed (data rate) at which eMBB communication is possible. In a case where the SNR value is greater than or equal to the first specified value (Yes in step S402), the processing proceeds to step S403, and in a case where the SNR value is not greater than or equal to the first specified value (No in step S402), the processing proceeds to step S406.

In step S403, the slice type determining unit 305 judges whether or not the total number of UEs connected between the IAB donor 101 and the target IAB node (the total number of connected UEs at the IAB donor 101 and the target IAB node) is less than or equal to a second specified value. In the communication system 100 shown in FIG. 1, in a case where the target IAB node is the IAB node 102, the total number of connected UEs is 3, and in a case where the target IAB node is the IAB node 104, the total number of connected UEs is 5. The second specified value is 4 in this embodiment, but may be another value. In a case where the total number of connected UEs is less than or equal to the second specified value (Yes in step S403), the processing proceeds to step S404, and in a case where the total number of connected UEs is not less than or equal to the second specified value (No in step S403), the processing proceeds to step S406.

In step S404, the slice type determining unit 305 judges, based on the acquired status information or information stored in the storage unit 202, whether or not a node (parent node) connected upstream to the target IAB node supports eMBB. In a case where the target IAB node is the IAB node 102, the parent node is the IAB donor 101, and in a case where the target IAB node is the IAB node 104, the parent node is the IAB node 102. That is, the parent node may be the IAB donor 101 or another IAB node that is different from the target IAB node, which is directly connected to the target IAB node between the target IAB node and the IAB donor 101. In a case where the parent node supports eMBB (Yes in step S404), the processing proceeds to step S405, and in a case where the parent node does not support eMBB (No in step S404), the processing proceeds to step S406.

In step S405, the signal generating unit 306 adds eMBB to NSSAI (Network Slice Selection Assistance Information). As described above, NSSAI is information including slice types (SSTs (Slice Service Types)) that can be supported in a list form. Specifically, the signal generating unit 306 sets an SST value corresponding to eMBB to the NSSAI information element.

The processing from step S406 to step S409 is processing for judging whether or not the target IAB node supports low latency communication (URLLC in this embodiment) as a slice type. In step S406, the slice type determining unit 305 judges, based on the status information acquired from the target IAB node, whether or not the target IAB node supports TSN (Time-Sensitive Networking). In a case where the target IAB node supports TSN (Yes in step S406), the processing proceeds to step S407, and in a case where the target IAB node does not support TSN (No in step S406), the processing proceeds to step S410.

In step S407, the slice type determining unit 305 judges, based on the path information acquired from the target IAB node, whether or not the number of hops from the IAB donor 101 to the target IAB node is less than or equal to a third specified value. In a case where the target IAB node is the IAB node 102, the number of hops is 1. The following description will be given assuming that the third specified value is 2 in this embodiment. In a case where the number of hops is less than or equal to the third specified value (Yes in step S407), the processing proceeds to step S408, and in a case where the number of hops is not less than or equal to the third specified value (No in step S407), the processing proceeds to step S410. In step S408, the slice type determining unit 305 judges, based on the acquired status information or information stored in the storage unit 202, whether or not a parent node supports URLLC. Although the targets for judging support are different from each other, the processing of step S408 is the same as that of step S404. In a case where the parent node supports URLLC (Yes in step S408), the processing proceeds to step S409, and in a case where the parent node does not support URLLC (No in step S408), the processing proceeds to step S410. In step S409, the signal generating unit 306 adds URLLC to NSSAI. Specifically, the signal generating unit 306 sets an SST value corresponding to URLLC to the NSSAI information element. In the subsequent step S410, the signal generating unit 306 sets an SST value corresponding to MIot to the NSSAI information element.

The processing from step S400 to step S411 is performed on all the target IAB nodes in the order of IAB nodes 102, 103, 104, and 105, and then the signal generating unit 306 generates BAP control packets that include the set (generated) NSSAI information element to the IAB nodes 102 to 105. Then, in step S412, the signal transmitting unit 301 informs the IAB nodes 102 to 105 of NSSAI (slice type list) by transmitting the generated BAP control packets to the IAB nodes 102 to 105.

As described above, the IAB donor 101 can determine slice types for the IAB nodes 102 to 105 in consideration of the path information and the status information. That is, the IAB donor 101 can assign slice types respectively to the IAB nodes according to a communication state and topology.

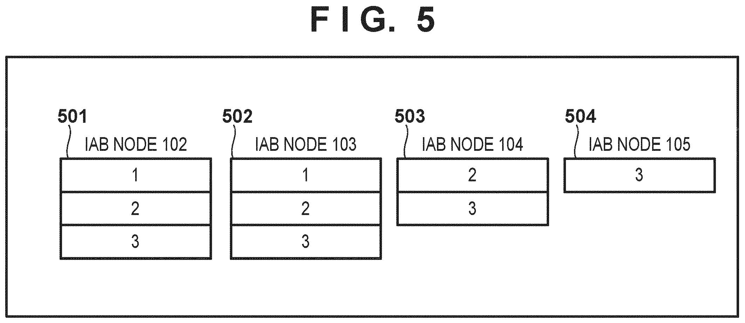

FIG. 5 shows an example of a conceptual diagram of NSSAI information elements showing the slice types of the IAB nodes 102 to 105 determined through the processing shown in FIGS. 4A and 4B. NSSAI 501 to NSSAI 504 respectively represent conceptual diagrams of NSSAI information elements for the IAB nodes 102 to 105 determined by the IAB donor 101. In the example shown in FIG. 5, the SST value corresponding to eMBB is set to "1", the SST value corresponding to URLLC is set to "2", and the SST value corresponding to MIot is set to "3". It can be seen from FIG. 5 that the IAB nodes 102 and 103 support eMBB, URLLC, and MIot, the IAB node 104 supports URLLC and MIot, and the IAB node 105 supports only MIot. Note that FIG. 5 shows an example in which SST values corresponding to three types of slice types can be set. However, by adding other SST/SST values, slice types can be defined and provided according to other services and purposes.

### Operations in communication system

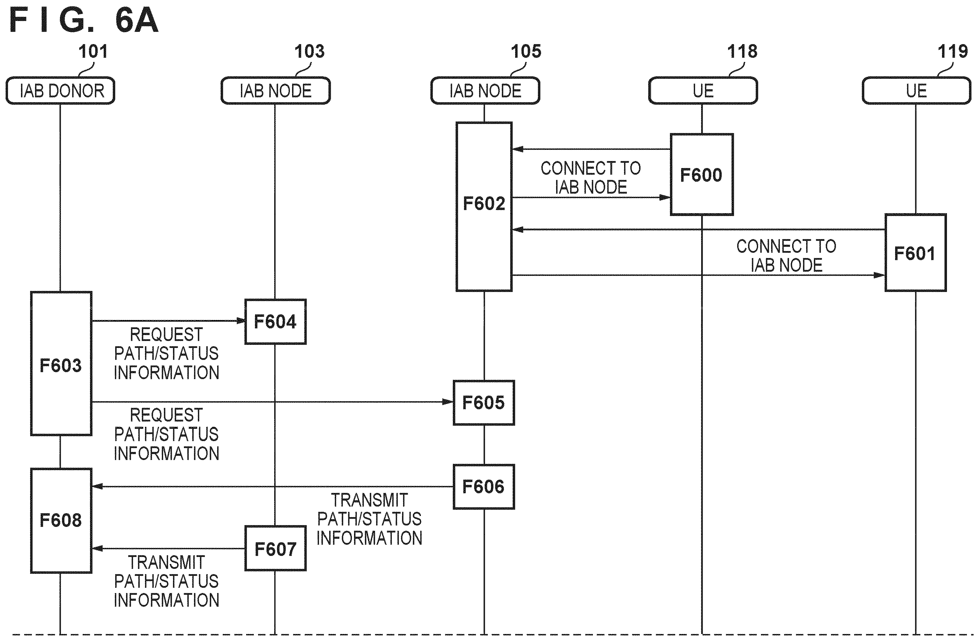

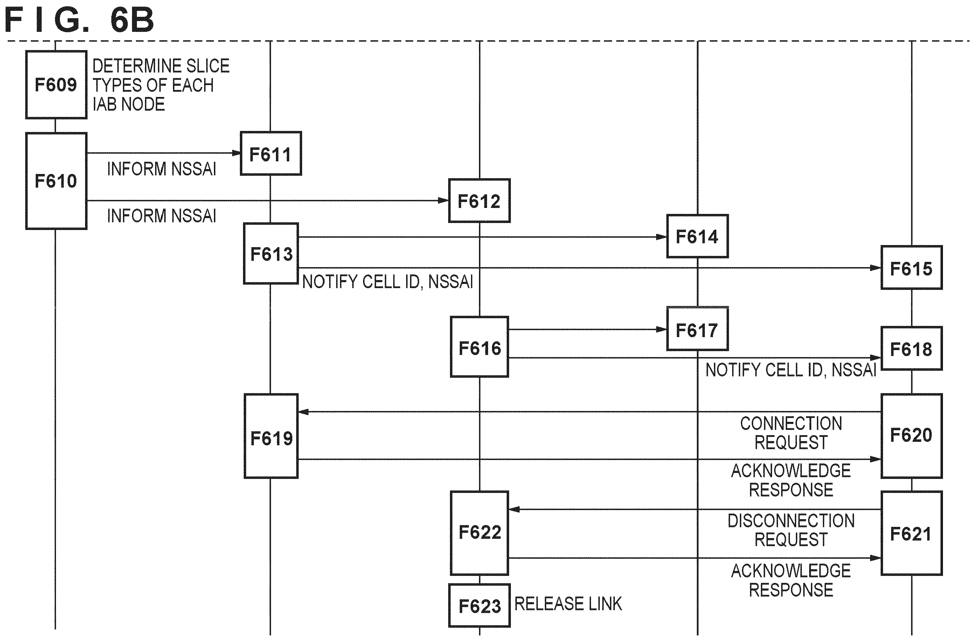

FIGS. 6A and 6B are diagrams showing a communication sequence in the communication system 100 according to this embodiment. The following describes operations performed from when the IAB donor 101 determines slice types that can be supported by the IAB nodes 103 and 105 and informs the UEs 118 and 119 of the slice types, to when the UEs 118 and 119 connect to IAB nodes that support desired slice types. Note that the same processing is performed on the other IAB nodes 102 and 104, and the UEs 110 to 117, but for the sake of simplifying a description, only the above communication device will be described.

As the initial state of the communication system 100 described in FIG. 1, the UEs 118 and 119 make a connection request to the IAB node 105 with the highest radio wave intensity in F600 and F601. In F602, the IAB node 105 acknowledges the connection requests transmitted from the UEs 118 and 119, and processing for connection between the IAB node and the UEs 118 and 119 is performed. It is presumed that the UE 119 desires to receive eMBB service provision according to the application to be executed.

In F603 to F605, the IAB donor 101 requests the transmission of the path information and the status information from the IAB node 103 and 105, and the IAB nodes 103 and 105 receive the request. In F606, the IAB node 105 transmits, to the IAB donor 101, the path information and the status information regarding the IAB node 105. In F607, the IAB node 103 transmits, to the IAB donor 101, the path information and the status information regarding the IAB node 103 in a similar manner. In F608, the IAB donor 101 receives the path information and the status information from the IAB nodes 103 and 105. Here, the IAB donor 101 may collect (receive) the path information and the status information regarding the IAB nodes 103 and 105 at certain periodical timing. Alternatively, the IAB nodes 103 and 105 may spontaneously transmit the information to the IAB donor 101 when the communication state changes.

In F609, the IAB donor 101 performs the processing of flowcharts shown in FIGS. 4A and 4B, and determines slice types supported by the IAB nodes 103 and 105. The determined slice types are shown in FIG. 5, and the IAB node 103 supports all the slice types (eMBB, URLLC, MIot), and the IAB node 105 supports only MIot.

In F610 and F611, the IAB donor 101 informs the IAB node 103 of NSSAI indicating the slice type determined for the IAB node 103, and the IAB node 103 receives the NSSAI. In F610 and F612, similarly, the IAB donor 101 informs the IAB node 105 of NSSAI indicating the slice type determined for the IAB node 105, and the IAB node 105 receives the NSSAI.

In F613 to F615, the IAB node 103 notifies the UEs 118 and 119 of the NSSAI of which the IAB donor 101 has informed in F611, together with the cell ID with which the IAB node 103 can be identified, and the UEs 118 and 119 receive them. In F616 to F618, the IAB node 105 notifies the UEs 118 and 119 of the NSSAI of which the IAB donor 101 has informed in F612, together with the cell ID with which the IAB node 105 can be identified, and the UEs 118 and 119 receive them.

As described above, the UE 119 desires to receive eMBB service provision. In view of this, in F619 and F620, the UE 119 makes a connection request to the IAB node 103 that supports eMBB, the IAB node 103 repeats a connection acknowledge response, and thus the UE 119 is connected to the IAB node 103. Here, in a case where the UE 119 is connected to the IAB node 103, the total number of connected UEs in the IAB node 103 changes from 3 to 4. As described above, the second specified value (step S403 in FIG. 4A) used to judge whether the IAB node supports eMBB is 4 in this embodiment, and thus it can be judged that the IAB node 103 can maintain eMBB, and the acknowledge response is sent to the UE 119. Also, in a case where the total number of UEs connected to the IAB node 103 increases, the IAB node 103 may make an inquiry about the reassignment of NSSAI to the IAB donor 101 again, the NSSAI may be updated, and it may be judged whether the UE 119 can be connected thereto.

In F622 and F623, the UE 119 transmits a disconnection request to the IAB node 105, and the IAB node 105 returns a disconnection acknowledge response and releases the link with the UE 119.

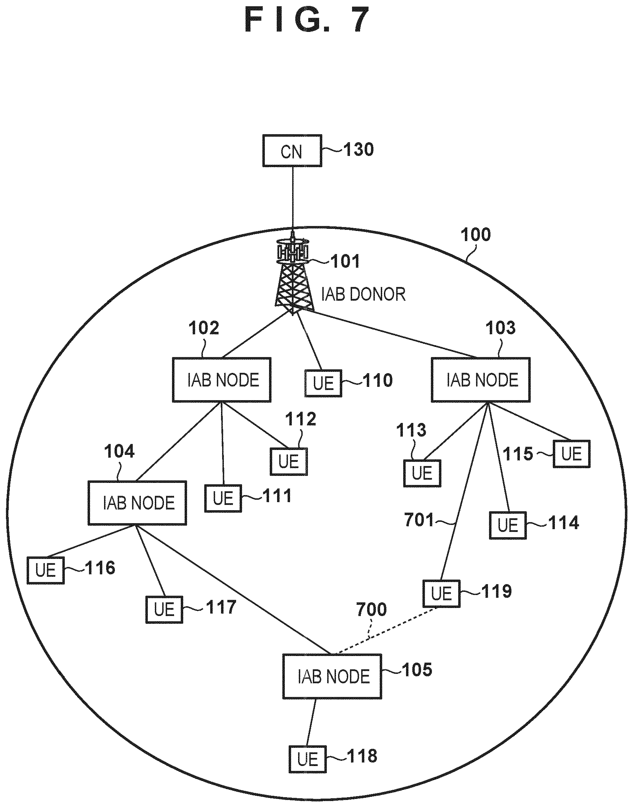

FIG. 7 is a diagram showing a network topology after a slice type is determined by the IAB donor 101 in the communication system 100 according to an embodiment. In the communication system 100, the UE 119, which is connected to the IAB node 105 via a communication link 700 after the sequences shown in FIGS. 6A and 6B are executed, forms a new link 701 with the IAB node 103, and connects thereto. The communication link 700 is disconnected and released, and the UE 119 is capable of communication using the eMBB slice type.

As described above, according to this embodiment, the IAB donor 101 determines (assigns) slice types for the IAB nodes 102 to 105 and informs the IAB nodes 102 to 105 of NSSAI, and thus can provide information regarding slice types appropriate to the UEs 110 to 119.

Note that, as described above, slice types are not limited to three types (eMBB, URLLC, MIot), and when an SST, which is a new slice type, is added, the above-described slice type determination method can also be applied using a predetermined condition. Furthermore, when an SD (Slice Differentiator), which is an option of SST, is used, it is also possible to apply the slice type determination method described above.

### Embodiment 2

In Embodiment 1, a method in which the IAB donor 101 assigns NSSAI to the IAB nodes 102 to 105 in the initial state when the communication system 100 starts operating, or in a static communication state is described. In Embodiment 2, a case will be described where a communication environment in the communication system 100 changes (e.g., a change in SNR, a change in the total number of connected UEs, and the like). Note that the description shared with Embodiment 1 is omitted.

In this embodiment, as a case where the communication environment changes, it is presumed that a communication state (communication quality) between the IAB donor 101 and the IAB node 103 deteriorates (e.g., SNR decreases) in the communication system 100. In this case, the IAB node 103 requests reassignment of NSSAI from the IAB donor 101. Alternatively, based on the received NSSAI, the IAB node 103 may judge that it is difficult (impossible) to maintain the network slice assigned to the IAB node 103, and may send, to the IAB donor 101, information "SST not maintainable" (information indicating that it is impossible to maintain the network slice). The IAB donor 101 can update and determine a slice supported by the IAB node 103 in response to the reception of such a request/information, and accordingly inform the IAB node 103 of the generated NSSAI.

Also, in a case where a communication environment changes as described above, the IAB node 103 may notify the UEs 113 to 115, and 119 of deterioration in the communication state for carrying out eMBB. In this case, the UEs 113 to 115, and 119 may further search for other IAB nodes 102, 104, and 105 that are connectable and support eMBB, and make a connection request in the case of good conditions.

As described above, according to this embodiment, the IAB donor 101 updates and determines (assigns) types of network slices that can be supported by an IAB node according to a change in the communication environment, and informs the IAB node of the NSSAI. Alternatively, the IAB donor notifies the UEs 110 to 119 of a deterioration in the communication state for carrying out a predetermined network slice, according to a change in the communication environment. As a result, the IAB node can provide the UEs 110 to 119 with information regarding appropriate slice types.

### Other Embodiments

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the scope of the present invention. The scope of the present invention is defined by the following claims.

### REFERENCE SIGNS LIST

- 100: Communication system
- 101: IAB donor
- 102 to 105: IAB node
- 110 to 119: UE

## Claims

1. A communication device that functions as a base station in a communication system (100) and as an Integrated Access and Backhaul, IAB, donor in an IAB network, the communication device comprising:
receiving means for receiving, from a second communication device that is configured to function as an IAB node for relaying communication between the communication device and a user equipment in the communication system (100),
first information regarding a path between the second communication device and the communication device and second information regarding a status of the second communication device;
determining means for determining a type of network slice supported by the second communication device, based on the first information and the second information; and
informing means for informing the second communication device of the determined type of network slice.

2. The communication device according to claim 1, wherein the communication network includes a New Radio, NR, backhaul link and an NR access link.

3. The communication device according to claim 1 or 2, wherein the informing means is configured to inform the second communication device of the one or more determined types of network slices, using a packet according to a Backhaul Adaptation Protocol, BAP, or an Radio Resource Control, RRC, protocol.

4. The communication device according to any one of claims 1 to 3, further comprising
judging means for judging a type of network slice supported by the communication device or another node that is directly connected to the second communication device between the second communication device and the communication device.

5. The communication device according to claim 4, wherein
the second information includes a value indicating a received signal quality of the second communication device, and the total number of user equipments connected between the second communication device and the communication device,
in a case where the judging means judges that a high-speed and large-capacity communication is supported by the communication device or the other node as the type of network slice, and the value indicating the received signal quality is greater than or equal to a first specified value and the total number of user equipments is less than or equal to a second specified value, the determining means is configured to determine that the high-speed and large-capacity communication is supported by the second communication device.

6. The communication device according to claim 4 or 5, wherein
the first information includes the number of hops from the communication device to the second communication device, and the second information includes information indicating whether or not the second communication device supports Time-Sensitive Networking, TSN, and
in a case where the judging means judges that a low latency communication is supported by the communication device or the other node as the type of network slice, and the second communication device supports the TSN and the number of hops is greater than or equal to a third specified value, the determining means is configured to determine that the low latency communication is supported by the second communication device.

7. The communication device according to any one of claims 1 to 6, wherein the determining means is configured to determine that a simultaneous multiple connection is supported by the second communication device as the type of network slice.

8. The communication device according to any one of claims 1 to 7, wherein the receiving means is configured to receive the first information and the second information at certain periodical timing.

9. The communication device according to any one of claims 1 to 7, further comprising
requesting means for requesting transmission of the first information and the second information from the second communication device,
wherein the receiving means is configured to receive the first information and the second information in response to the request made by the requesting means.

10. The communication device according to any one of claims 1 to 9, wherein in a case where the informing means informs the second communication device of the determined type of network slice and information indicating that support for the determined network slice is not maintainable is then received by the receiving means from the second communication device, the determining means is configured to update and determine the type of network slice supported by the second communication device.

11. A communication device that functions as an IAB node for relaying communication between a base station that functions as an Integrated Access and Backhaul, IAB, donor in an IAB network and a user equipment in a communication system (100),
the communication device comprising:
transmitting means for transmitting, to the base station, first information regarding a path between the communication device and the base station and second information regarding a status of the communication device;
receiving means for receiving, from the base station, information regarding a type of network slice supported by the communication device, the type being determined by the base station based on the first information and the second information; and
notifying means for notifying the user equipment of information with which the communication device can be identified, together with the information regarding the type of network slice.

12. The communication device according to claim 11, wherein the communication network includes an New Radio, NR, backhaul link and an NR access link.

13. The communication device according to claim 11 or 12, further comprising
judging means for judging whether or not a network slice assigned according to the information received by the receiving means is not maintainable, according to a change in a communication environment,
wherein in a case where the judging means judges that the network slice is not maintainable, information indicating that support of the network slice is not maintainable is transmitted to the base station.

14. A method for controlling a communication device that functions as a base station in a communication system (100) and as an Integrated Access and Backhaul, BAP, donor in an IAB network, the method comprising:
a receiving step of receiving, from a second communication device that functions as an IAB node that relays communication between the communication device and a user equipment in the communication system (100), first information regarding a path between the second communication device and the communication device and second information regarding a status of the second communication device ;
a determining step of determining a type of network slice supported by the second communication device, based on the first information and the second information; and
an informing step of informing the second communication device of the determined type of network slice.

15. A method for controlling a communication device that functions as an Integrated Access and Backhaul, IAB, node that relays communication between a base station that functions as an IAB donor in an IAB network and a user equipment in a communication system (100), the method comprising:
a transmitting step of transmitting, to the base station, first information regarding a path between the communication device and the base station and second information regarding a status of the communication device;
a receiving step of receiving, from the base station, information including a type of network slice supported by the communication device, the type being determined by the base station based on the first information and the second information; and
a notifying step of notifying the user equipment of information with which the communication device can be identified, together with the type of network slice.

16. A program which, when executed by one or more processors of a computer of a communication device according to claim 1, or according to claim 11, causes the communication device to carry out the method according to claim 14 or 15, respectively.

## Patentansprüche

1. Kommunikationsvorrichtung, die als eine Basisstation in einem Kommunikationssystem (100) und als ein Integrated Access and Backhaul Donor, IAB-Donor, in einem IAB-Netzwerk fungiert, wobei die Kommunikationsvorrichtung umfasst:
eine Empfangseinrichtung zum Empfangen von ersten Informationen bezüglich eines Pfads zwischen einer zweiten Kommunikationsvorrichtung und der Kommunikationsvorrichtung und zweiten Informationen bezüglich eines Status der zweiten Kommunikationsvorrichtung von der zweiten Kommunikationsvorrichtung, die konfiguriert ist, in dem Kommunikationssystem (100) als ein IAB-Knoten zum Weiterleiten von Kommunikation zwischen der Kommunikationsvorrichtung und einem Benutzergerät zu fungieren;
eine Bestimmungseinrichtung zum Bestimmen eines von der zweiten Kommunikationsvorrichtung unterstützten Network-Slice-Typs basierend auf den ersten Informationen und den zweiten Informationen; und
eine Informationseinrichtung zum Informieren der zweiten Kommunikationsvorrichtung über den bestimmten Network-Slice-Typ.

2. Kommunikationsvorrichtung nach Anspruch 1, wobei das Kommunikationsnetzwerk einen New Radio-Backhaul-Link, NR-Backhaul-Link, und einen NR-Access-Link enthält.

3. Kommunikationsvorrichtung nach Anspruch 1 oder 2, wobei die Informationseinrichtung konfiguriert ist, unter Verwendung eines Pakets gemäß einem Backhaul Adaptation Protocol, BAP, oder einem Radio Resource Control Protocol , RRC Protocol, die zweite Kommunikationsvorrichtung über den einen oder die mehreren bestimmten Network-Slice-Typen zu informieren.

4. Kommunikationsvorrichtung nach einem der Ansprüche 1 bis 3, ferner umfassend
eine Beurteilungseinrichtung zum Beurteilen eines von der Kommunikationsvorrichtung oder einem anderen Knoten, der zwischen der zweiten Kommunikationsvorrichtung und der Kommunikationsvorrichtung direkt mit der zweiten Kommunikationsvorrichtung verbunden ist, unterstützten Network-Slice-Typs.

5. Kommunikationsvorrichtung nach Anspruch 4, wobei
die zweiten Informationen einen Wert enthalten, der eine empfangene Signalqualität der zweiten Kommunikationsvorrichtung und die Gesamtzahl von zwischen der zweiten Kommunikationsvorrichtung und der Kommunikationsvorrichtung verbundenen Benutzergeräten angibt,
falls die Beurteilungseinrichtung beurteilt, dass eine Kommunikation mit hoher Geschwindigkeit und großer Kapazität von der Kommunikationsvorrichtung oder dem anderen Knoten als der Network-Slice-Typ unterstützt wird, und der Wert, der die empfangene Signalqualität angibt, größer als oder gleich groß wie ein erster spezifizierter Wert ist und die Gesamtzahl von Benutzergeräten kleiner als oder gleich groß wie ein zweiter spezifizierter Wert ist, die Bestimmungseinrichtung konfiguriert ist, zu bestimmen, dass die Kommunikation mit hoher Geschwindigkeit und großer Kapazität von der zweiten Kommunikationsvorrichtung unterstützt wird.

6. Kommunikationsvorrichtung nach Anspruch 4 oder 5, wobei
die ersten Informationen die Anzahl von Hops von der Kommunikationsvorrichtung zur zweiten Kommunikationsvorrichtung umfassen und die zweiten Informationen Informationen enthalten, die angeben, ob die zweite Kommunikationsvorrichtung Time-Sensitive Networking, TSN, unterstützt, und
falls die Beurteilungseinrichtung beurteilt, dass eine Kommunikation mit niedriger Latenz von der Kommunikationsvorrichtung oder dem anderen Knoten als der Network-Slice-Typ unterstützt wird, und die zweite Kommunikationsvorrichtung das TSN unterstützt und die Anzahl von Hops größer als oder gleich groß wie ein dritter spezifizierter Wert ist, die Bestimmungseinrichtung konfiguriert ist, zu bestimmen, dass die Kommunikation mit niedriger Latenz von der zweiten Kommunikationsvorrichtung unterstützt wird.

7. Kommunikationsvorrichtung nach einem der Ansprüche 1 bis 6, wobei die Bestimmungseinrichtung konfiguriert ist, zu bestimmen, dass eine simultane Mehrfachverbindung von der zweiten Kommunikationsvorrichtung als der Network-Slice-Typ unterstützt wird.

8. Kommunikationsvorrichtung nach einem der Ansprüche 1 bis 7, wobei die Empfangseinrichtung konfiguriert ist, die ersten Informationen und die zweiten Informationen zu bestimmten periodischen Zeitpunkten zu empfangen.

9. Kommunikationsvorrichtung nach einem der Ansprüche 1 bis 7, ferner umfassend
eine Anforderungseinrichtung zum Anfordern einer Übertragung der ersten Informationen und der zweiten Informationen von der zweiten Kommunikationsvorrichtung,
wobei die Empfangseinrichtung konfiguriert ist, die ersten Informationen und die zweiten Informationen als Reaktion auf die von der Anforderungseinrichtung gemachte Anforderung zu empfangen.

10. Kommunikationsvorrichtung nach einem der Ansprüche 1 bis 9, wobei, falls die Informationseinrichtung die zweite Kommunikationsvorrichtung über den bestimmten Network-Slice-Typ informiert und Informationen, die angeben, dass eine Unterstützung für den bestimmten Netzwerk-Slice nicht aufrechterhalten werden kann, dann durch die Empfangseinrichtung von der zweiten Kommunikationsvorrichtung empfangen werden, die Bestimmungseinrichtung konfiguriert ist, den von der zweiten Kommunikationsvorrichtung unterstützten Network-Slice-Typ zu aktualisieren und zu bestimmen.

11. Kommunikationsvorrichtung, die als ein IAB-Knoten zum Weiterleiten einer Kommunikation zwischen einer Basisstation, die als ein Integrated Access and Backhaul Donor, IAB-Donor, in einem IAB-Netzwerk fungiert, und einem Benutzergerät in einem Kommunikationssystem (100) fungiert, wobei die Kommunikationsvorrichtung umfasst:
eine Übertragungseinrichtung zum Übertragen von ersten Informationen bezüglich eines Pfads zwischen der Kommunikationsvorrichtung und der Basisstation und zweiten Informationen bezüglich eines Status der Kommunikationsvorrichtung an die Basisstation;
eine Empfangseinrichtung zum Empfangen von Informationen bezüglich eines von der Kommunikationsvorrichtung unterstützten Network-Slice-Typs von der Basisstation, wobei der Typ durch die Basisstation basierend auf den ersten Informationen und den zweiten Informationen bestimmt wird; und
eine Benachrichtigungseinrichtung zum Benachrichtigen des Benutzergeräts über Informationen, mit denen die Kommunikationsvorrichtung identifiziert werden kann, zusammen mit den Informationen bezüglich des Network-Slice-Typs.

12. Kommunikationsvorrichtung nach Anspruch 11, wobei das Kommunikationsnetzwerk einen New Radio-Backhaul Link, NR-Backhaul Link, und einen NR-Access-Link enthält.

13. Kommunikationsvorrichtung nach Anspruch 11 oder 12, ferner umfassend
eine Beurteilungseinrichtung zum Beurteilen, gemäß einer Änderung in einer Kommunikationsumgebung, ob ein gemäß den durch die Empfangseinrichtung empfangenen Informationen zugewiesener Network-Slice nicht aufrechterhalten werden kann,
wobei, falls die Beurteilungseinrichtung beurteilt, dass der Network-Slice nicht aufrechterhalten werden kann, Informationen an die Basisstation übertragen werden, die angeben, dass eine Unterstützung des Network-Slice nicht aufrechterhalten werden kann.

14. Verfahren zum Steuern einer Kommunikationsvorrichtung, die als eine Basisstation in einem Kommunikationssystem (100) und als ein Integrated Access and Backhaul Donor, BAP-Donor, in einem IAB-Netzwerk fungiert, wobei das Verfahren umfasst:
einen Empfangsschritt zum Empfangen von ersten Informationen bezüglich eines Pfads zwischen der zweiten Kommunikationsvorrichtung und der Kommunikationsvorrichtung und zweiten Informationen bezüglich eines Status der zweiten Kommunikationsvorrichtung von einer zweiten Kommunikationsvorrichtung, die in dem Kommunikationssystem (100) als ein IAB-Knoten fungiert, der Kommunikation zwischen der Kommunikationsvorrichtung und einem Benutzergerät weiterleitet;
einen Bestimmungsschritt zum Bestimmen eines von der zweiten Kommunikationsvorrichtung unterstützten Network-Slice-Typs basierend auf den ersten Informationen und den zweiten Informationen; und
einen Informationsschritt zum Informieren der zweiten Kommunikationsvorrichtung über den bestimmten Network-Slice-Typ.

15. Verfahren zum Steuern einer Kommunikationsvorrichtung, die als ein Integrated Access and Backhaul Node, IAB-Node fungiert, der in einem Kommunikationssystem (100) Kommunikation weiterleitet zwischen einer Basisstation, die als ein IAB-Donor in einem IAB-Netzwerk fungiert, und einem Benutzergerät, wobei das Verfahren umfasst:
einen Übertragungsschritt zum Übertragen von ersten Informationen bezüglich eines Pfads zwischen der Kommunikationsvorrichtung und der Basisstation und zweiten Informationen bezüglich eines Status der Kommunikationsvorrichtung an die Basisstation;
einen Empfangsschritt zum Empfangen von Informationen, die einen von der Kommunikationsvorrichtung unterstützten Network-Slice-Typ enthalten, von der Basisstation, wobei der Typ durch die Basisstation basierend auf den ersten Informationen und den zweiten Informationen bestimmt wird; und
einen Benachrichtigungsschritt zum Benachrichtigen des Benutzergeräts über Informationen, mit denen die Kommunikationsvorrichtung identifiziert werden kann, zusammen mit dem Network-Slice-Typ.

16. Programm, das, wenn es von einem oder mehreren Prozessoren eines Computers einer Kommunikationsvorrichtung nach Anspruch 1 oder nach Anspruch 11 ausgeführt wird, die Kommunikationsvorrichtung veranlasst, das Verfahren nach Anspruch 14 bzw. 15 auszuführen.

## Revendications

1. Dispositif de communication faisant fonction de station de base dans un système de communication (100) et de donneur d'accès et backhaul intégrés, IAB, dans un réseau IAB, le dispositif de communication comprenant :
un moyen de réception servant à recevoir, d'un deuxième dispositif de communication qui est configuré pour faire fonction de nœud IAB servant à relayer une communication entre le dispositif de communication et un équipement utilisateur dans le système de communication (100), des premières informations concernant un chemin entre le deuxième dispositif de communication et le dispositif de communication et des deuxièmes informations concernant un état du deuxième dispositif de communication ;
un moyen de détermination servant à déterminer un type de tranche de réseau pris en charge par le deuxième dispositif de communication, sur la base des premières informations et des deuxièmes informations ; et
un moyen d'information servant à informer le deuxième dispositif de communication quant au type de tranche de réseau déterminé.

2. Dispositif de communication selon la revendication 1, dans lequel le réseau de communication inclut une liaison de backhaul New Radio, NR, et une liaison d'accès NR.

3. Dispositif de communication selon la revendication 1 ou 2, dans lequel le moyen d'information est configuré pour informer le deuxième dispositif de communication quant à un ou plusieurs types de tranche de réseau déterminés, en utilisant un paquet selon un protocole d'adaptation de backhaul, BAP, ou un protocole de commande de ressources radio, RRC.

4. Dispositif de communication selon n'importe laquelle des revendications 1 à 3, comprenant en outre
un moyen de jugement servant à juger un type de tranche de réseau pris en charge par le dispositif de communication ou par un autre nœud qui est directement connecté au deuxième dispositif de communication entre le deuxième dispositif de communication et le dispositif de communication.

5. Dispositif de communication selon la revendication 4, dans lequel
les deuxièmes informations incluent une valeur indiquant une qualité de signal reçu du deuxième dispositif de communication, et le nombre total d'équipements utilisateur connectés entre le deuxième dispositif de communication et le dispositif de communication,
dans le cas où le moyen de jugement juge qu'une communication à haut débit et à grande capacité est prise en charge comme type de tranche de réseau par le dispositif de communication ou par l'autre nœud, et où la valeur indiquant la qualité de signal reçu est supérieure ou égale à une première valeur spécifiée et le nombre total d'équipements utilisateur est inférieur ou égal à une deuxième valeur spécifiée, le moyen de détermination est configuré pour déterminer que la communication à haut débit et à grande capacité est prise en charge par le deuxième dispositif de communication.

6. Dispositif de communication selon la revendication 4 ou 5, dans lequel
les premières informations incluent le nombre de sauts du dispositif de communication au deuxième dispositif de communication, et les deuxièmes informations incluent des informations indiquant si le deuxième dispositif de communication prend en charge la mise en réseau sensible au temps, TSN ; et
dans le cas où le moyen de jugement juge qu'une communication à faible latence est prise en charge comme type de tranche de réseau par le dispositif de communication ou par l'autre nœud, et où le deuxième dispositif de communication prend en charge la TSN et le nombre de sauts est supérieur ou égal à une troisième valeur spécifiée, le moyen de détermination est configuré pour déterminer que la communication à faible latence est prise en charge par le deuxième dispositif de communication.

7. Dispositif de communication selon n'importe laquelle des revendications 1 à 6, dans lequel le moyen de détermination est configuré pour déterminer qu'une connexion multiple simultanée est prise en charge comme type de tranche de réseau par le dispositif de communication.

8. Dispositif de communication selon n'importe laquelle des revendications 1 à 7, dans lequel le moyen de réception est configuré pour recevoir les premières informations et les deuxièmes informations à un certain rythme périodique.

9. Dispositif de communication selon n'importe laquelle des revendications 1 à 7, comprenant en outre
un moyen de demande servant à demander au deuxième dispositif de communication la transmission des premières informations et des deuxièmes informations,
dans lequel le moyen de réception est configuré pour recevoir les premières informations et les deuxièmes informations en réponse à la demande faite par le moyen de demande.

10. Dispositif de communication selon n'importe laquelle des revendications 1 à 9, dans lequel, dans le cas où le moyen d'information informe le deuxième dispositif de communication quant au type de tranche de réseau déterminé et où des informations indiquant que la prise en charge de la tranche de réseau déterminée ne peut pas être maintenue sont ensuite reçues par le moyen de réception en provenance du deuxième dispositif de communication, le moyen de détermination est configuré pour mettre à jour et déterminer le type de tranche de réseau pris en charge par le deuxième dispositif de communication.

11. Dispositif de communication faisant fonction de nœud IAB servant à relayer une communication entre une station de base faisant fonction de donneur d'accès et backhaul intégrés, IAB, dans un réseau IAB et un équipement utilisateur dans un système de communication (100), le dispositif de communication comprenant :
un moyen de transmission servant à transmettre, à la station de base, des premières informations concernant un chemin entre le dispositif de communication et la station de base et des deuxièmes informations concernant un état du dispositif de communication ;
un moyen de réception servant à recevoir, de la station de base, des informations concernant un type de tranche de réseau pris en charge par le dispositif de communication, le type étant déterminé par la station de base sur la base des premières informations et des deuxièmes informations ; et
un moyen de notification servant à notifier, à l'équipement utilisateur, des informations avec lesquelles le dispositif de communication peut être identifié, conjointement avec les informations concernant le type de tranche de réseau.

12. Dispositif de communication selon la revendication 11, dans lequel le réseau de communication inclut une liaison de backhaul New Radio, NR, et une liaison d'accès NR.

13. Dispositif de communication selon la revendication 11 ou 12, comprenant en outre
un moyen de jugement servant à juger si une tranche de réseau attribuée selon les informations reçues par le moyen de réception ne peut pas être maintenue, selon un changement dans un environnement de communication,
dans lequel, dans le cas où le moyen de jugement juge que la tranche de réseau ne peut pas être maintenue, des informations indiquant que la prise en charge de la tranche de réseau ne peut pas être maintenue sont transmises à la station de base.

14. Procédé servant à commander un dispositif de communication faisant fonction de station de base dans un système de communication (100) et de donneur d'accès et backhaul intégrés, BAP, dans un réseau IAB, le procédé comprenant :
une étape de réception consistant à recevoir, d'un deuxième dispositif de communication faisant fonction de nœud IAB qui relaie une communication entre le dispositif de communication et un équipement utilisateur dans le système de communication (100), des premières informations concernant un chemin entre le deuxième dispositif de communication et le dispositif de communication et des deuxièmes informations concernant un état du deuxième dispositif de communication ;
une étape de détermination consistant à déterminer un type de tranche de réseau pris en charge par le deuxième dispositif de communication, sur la base des premières informations et des deuxièmes informations ; et
une étape d'information consistant à informer le deuxième dispositif de communication quant au type de tranche de réseau déterminé.

15. Procédé servant à commander un dispositif de communication faisant fonction de nœud d'accès et backhaul intégrés, IAB, qui relaie une communication entre une station de base faisant fonction de donneur IAB dans un réseau IAB et un équipement utilisateur dans un système de communication (100), le procédé comprenant :
une étape de transmission consistant à transmettre, à la station de base, des premières informations concernant un chemin entre le dispositif de communication et la station de base et des deuxièmes informations concernant un état du dispositif de communication ;
une étape de réception consistant à recevoir, de la station de base, des informations incluant un type de tranche de réseau pris en charge par le dispositif de communication, le type étant déterminé par la station de base sur la base des premières informations et des deuxièmes informations ; et
une étape de notification consistant à notifier, à l'équipement utilisateur, des informations avec lesquelles le dispositif de communication peut être identifié, conjointement avec le type de tranche de réseau.

16. Programme qui, lorsqu'il est exécuté par un ou plusieurs processeurs d'un ordinateur d'un dispositif de communication selon la revendication 1, ou selon la revendication 11, amène le dispositif de communication à mettre en œuvre le procédé selon la revendication 14 ou 15, respectivement.
